# EUROPÄISCHE PATENTSCHRIFT

(11) **EP 2 447 459 B1**
(45) Veröffentlichungstag und Bekanntmachung des Hinweises auf die Patenterteilung: **17.07.2013**
(21) Anmeldenummer: 11186403.9
(22) Anmeldetag: 24.10.2011
(51) Int. Cl.: E06B 3/263, E06B 1/26, C08L 25/06, C08K 7/14, C08L 77/04

(54) **Isoliersteg**
Isolating bar
Isolateur

(30) Priorität: 26.10.2010 DE 102010060176
(43) Veröffentlichungstag der Anmeldung: 02.05.2012
(73) Patentinhaber: Ensinger GmbH, 71154 Nufringen (DE)
(72) Erfinder: Krohmer, Christoph, 71159 Mötzingen (DE); Götz, Armin, 71126 Gäufelden (DE); Ensinger, Wilfried, 72108 Rottenburg a.N. (DE); Richter, Frank, 72768 Reutlingen (DE); Lange, Guido, 70199 Stuttgart (DE); Meyer, Lothar, 71083 Herrenberg-Affstätt (DE)
(74) Vertreter: Hoeger, Stellrecht & Partner Patentanwälte

(56) Entgegenhaltungen:
- EP-A1- 2 163 573
- WO-A1-99/45547
- WO-A1-2004/091999
- DE-A1- 10 035 649
- JP-A- 2010 060 044
- US-A1- 2004 150 498

## Beschreibung

Die Erfindung betrifft einen Isoliersteg, insbesondere zur Verwendung in Kunststoff-Metall-Verbundprofilen, wobei der Isoliersteg aus einem Kunststoffmaterial gefertigt ist.

Solche Isolierstege gelangen in großem Umfang als Isolierprofil bei der Herstellung von wärmeisolierten Fenster-, Türen- und Fassadenelementen zum Einsatz, wobei sie dann häufig der mechanischen Verbindung eines metallischen Außenprofils mit einem innen liegenden, in der Regel ebenfalls aus Metall gefertigten Innenprofil dienen. Das Isolierprofil übernimmt dabei oft nicht nur die Funktion eines Bauteils, das die Wärmeleitung von außen nach innen und umgekehrt über einen direkten Kontakt von Außen- und Innenprofil vermeidet, sondern übernimmt als tragendes Bauteil auch konstruktive Aufgaben.

Im Zuge der Verschärfung der Wärmedämmrichtlinien werden Isolierstege mit großen Bauhöhen, entsprechend einem großen Abstand zwischen den über den Isoliersteg verbundenen Metallprofilen, verlangt, wobei die mechanische Festigkeit und Belastbarkeit, insbesondere auch bei unterschiedlichen Temperaturverhältnissen, besondere Bedeutung erlangt. Dem kann zum Teil mit komplexeren Geometrien der Isolierstege Rechnung getragen werden, zum anderen Teil steigen die Anforderungen an die Eigenschaften des Kunststoffmaterials.

Die Verbindung zwischen dem Isoliersteg und dem jeweiligen Metallprofil geschieht in den meisten Fällen über einen so genannten Einrollverbund, bei dem ein Fußteil des Isolierstegs in eine Aufnahme des Metallprofils eingeführt oder eingesetzt wird und nachfolgend ein Kraft- und/oder Formschluss mittels eines Rändels hergestellt wird. Der Kraft- und/oder Formschluss kann durch eine Klebeverbindung ergänzt werden.

In selteneren Fällen wird der Isoliersteg mit dem Metallprofil lediglich verklebt.

Die fertigen Verbundprofile werden häufig mittels Pulverlackierung beschichtet. Auch dieser Vorgang stellt besondere Anforderungen an das Kunststoffmaterial des Isolierstegs.

Aus der WO 2004/091999 A1 ist ein Hohlkammerverbundbauteil bekannt, bei dem das aus Kunststoffmaterial bestehende Element unter anderem aus syndiotaktischem Polystyrol gefertigt sein kann.

Aufgabe der vorliegenden Erfindung ist die Bereitstellung eines verbesserten Isolierstegs, mit dem die oben skizzierten Anforderungen in möglichst optimaler Weise erfüllt werden können.

Diese Aufgabe wird durch einen Isoliersteg mit den Merkmalen des Anspruchs 1 gelöst.

Durch die Verwendung von syndiotaktischem Polystyrol als erste thermoplastische Polymerkomponente erzielt man bei gleicher Bauhöhe des Isolierstegs und somit des Verbundprofils geringere Wärmedurchgangswerte z.B. gegenüber den häufig verwendeten Polyamid-basierten Stegen. Das syndiotaktische Polystyrol hat gegenüber Polyamid zusätzlich den Vorteil, dass es wenig Feuchtigkeit aufnimmt und damit die mechanischen Eigenschaften ebenso wie die Wärmeleitfähigkeit bei Änderung der Luftfeuchtigkeit im Wesentlichen unverändert bleiben.

Geeignete syndiotaktische Polystyrolmaterialien sind insbesondere aus der EP 0 757 064 B1 bekannt, wobei dort speziell auf die Materialdefinition in Absatz [0010] verwiesen werden kann.

Die für die vorliegende Erfindung geeigneten syndiotaktischen Polystyrole können mit Hilfe von Ziegler-Natta-Katalysatoren hergestellt werden oder auch durch Metallionen-Katalyse, wobei letztere bevorzugt sind.

Bevorzugte syndiotatkische Polystyrole weisen ein Molekulargewicht Mw im Bereich von ca. 10.000 bis ca. 5.000.000 g/Mol, weiter bevorzugt von ca. 30.000 bis ca. 3.000.000 g/Mol, noch weiter bevorzugt von ca. 50.000 bis ca. 2.000.000 g/Mol auf.

Weiter bevorzugt wird das syndiotaktische Polystyrol ausgewählt aus solchen Polymeren, die ein Verhältnis von Mw zu Mn im Bereich von ca. 1 bis ca. 10 aufweisen, weiter bevorzugt von ca. 1,2 bis ca. 6.

Gemäß einer ersten Ausführungsform der Erfindung umfasst das Kunststoffmaterial die erste Polymerkomponente insbesondere mit einem Anteil von ca. 30 bis ca. 99 Gew.%, weiter bevorzugt von ca. 30 bis ca. 60 Gew.%. Das syndiotaktische Polystyrol dient hier als Hauptbestandteil des Kunststoffmaterials.

Bevorzugt umfasst das Kunststoffmaterial eine zweite Polymerkomponente, welche insbesondere ausgewählt ist aus Polystyrol (PS), schlagzäh modifiziertem Polystyrol (PS-I), Polyphenylenether (PPE), Polyamid (PA), Polycarbonat (PC), Polyestercarbonat (PEC), Ethylvinylacetat (EVA), Polyphenylensulfid (PPS), Polyolefin, Polyester, insbesondere PET und PBT, Polysulfon und thermoplastischem Polyimid.

Im Folgenden werden die Eigenschaftsänderungen diskutiert, die erzielt werden, wenn das Kunststoffmaterial eine zweite Polymerkomponente enthält, gegenüber einem Isoliersteg, der mit einem Kunststoffmaterial erhalten wird, welches nur syndiotaktisches Polystyrol als Polymerkomponente enthält. Selbstverständlich ist die Erfindung nicht darauf beschränkt, nur zwei Polymerkomponenten in dem Kunststoffmaterial des Isolierstegs zu verwenden.

Kunststoffmaterialien mit einem Anteil von ca. 70 bis ca. 99 Gew.% syndiotaktischem Polystyrol mit einem Anteil an Polystyrol (PS) im Bereich von ca. 30 bis ca. 1 Gew.% bieten bei geringeren Materialkosten vergleichbare mechanische, elektrische, thermische und brandtechnische Eigenschaften.

Einen besonderen Vorteil erhält man bei der Profilherstellung, da eine geringere Nachschwindung beobachtet wird. Eine etwas geringere Wärmeformbeständigkeit, eine leicht verminderte Chemikalienbeständigkeit sowie eine etwas höhere Spannungsrissempfindlichkeit kann in vielen Anwendungen toleriert werden.

Kunststoffmaterialien mit einem Anteil von ca. 70 bis ca. 99 Gew.% an syndiotaktischem Polystyrol und ca. 30 bis ca. 1 Gew.% PS-I zeigen eine höhere Schlagzähigkeit und eine höhere Bruchdehnung.

Kunststoffmaterialien mit einem Anteil von ca. 50 bis ca. 99 Gew.% an syndiotaktischem Polystyrol und ca. 50 bis ca. 1 Gew.% PPE zeigen eine höhere Steifigkeit und Wärmeformbeständigkeit.

Kunststoffmaterialien mit einem Anteil von ca. 50 bis ca. 99 Gew.% an syndiotaktischem Polystyrol und ca. 50 bis ca. 1 Gew.% PA zeigen bei gleicher Wärmeformbeständigkeit eine höhere Schlagzähigkeit, eine höhere Flammwidrigkeit und eine bessere Chemikalienbeständigkeit. Geringe Nachteile liegen in der etwas höheren Wärmeleitfähigkeit sowie der höheren Feuchtigkeitsaufnahme.

Kunststoffmaterialien mit einem Anteil von ca. 50 bis ca. 99 Gew.% an syndiotaktischem Polystyrol und ca. 50 bis ca. 1 Gew.% PC, weiter bevorzugt ca. 70 bis ca. 99 Gew.% PS-S und ca. 30 bis ca. 1 Gew.% PC zeigen eine höhere Schlagzähigkeit und eine bessere Flammwidrigkeit, während die Chemikalienbeständigkeit und die Wärmeformbeständigkeit nur geringfügig leiden.

Auch Polyestercarbonat eignet sich in ähnlicher Weise wie Polycarbonat und mit denselben Mischungsverhältnissen als zweite Polymerkomponente.

Bevorzugte Mischungsverhältnisse von syndiotaktischem Polystyrol und EVA betragen häufig ca. 50 bis ca. 99 Gew.% PS-S und ca. 50 bis ca. 1 Gew.% EVA, weiter bevorzugt ca. 70 bis ca. 99 Gew.% PS-S und ca. 30 bis ca. 1 Gew.% EVA. Bei gleichen Festigkeitswerten erhält man bei diesen Kunststoffmaterialien eine höhere Schlagzähigkeit, auch bei tiefen Temperaturen, eine geringere Gaspermeation sowie eine bessere Beschichtbarkeit bei der Pulverlackierung.

Polyphenylensulfid als zweite Polymerkomponente kann die Wärmeformbeständigkeit verbessern, führt zu einer generell verbesserten Festigkeit, einer verbesserten Flammwidrigkeit sowie zu einer verbesserten Chemikalienbeständigkeit. Bevorzugte Kunststoffmaterialien enthalten ca. 50 bis ca. 99 Gew.% PS-S und ca. 50 bis ca. 1 Gew.% Polyphenylensulfid, weiter bevorzugt ca. 70 bis 99 Gew.% PS-S und ca. 30 bis ca. 1 Gew.% PPS.

Eine höhere Zähigkeit, eine verbesserte Tieftemperaturbeständigkeit, eine verbesserte Chemikalienbeständigkeit bei etwas geringerer Wärmeformbeständigkeit werden erzielt, wenn als zweite Polymerkomponente des Kunststoffmaterials ein Polyolefin, insbesondere Polyethylen niedriger Dichte (LDPE), lineares Polyethylen mit niedriger Dichte (LLDPE), Polyethylen mit hoher Dichte (HDPE), Polybuten-1, Poly-4-methylpenten-1, Polypropylen (PP), syndiotaktisches Polypropylen und Polypropylen-Copolymere, wie z.B. Ethylen-Propylen-Copolymere und Ethylen-Octen-Copolymere, verwendet wird. Die Anteilsgrenzen der jeweiligen Polymerkomponenten betragen bevorzugt ca. 50 bis ca. 99 Gew.% für PS-S und ca. 50 bis ca. 1 Gew.% für das Polyolefin, weiter bevorzugt ca. 60 bis 99 Gew.% PS-S und ca. 40 bis ca. 1 Gew.% Polyolefin.

PS-S mit Polyestern als zweite Polymerkomponente, insbesondere PET und PBT, eignen sich für solche Kunststoffmaterialien, die bezüglich ihrer Beschichtbarkeit optimiert sind. Bevorzugte Kunststoffmaterialien enthalten das PS-S mit ca. 50 bis ca. 99 Gew.% und den Polyester mit ca. 50 bis ca. 1 Gew.%, weiter bevorzugt das PS-S mit ca. 70 bis ca. 99 Gew.% und den Polyester mit ca. 30 bis ca. 1 Gew.%.

Höhere Wärmeformbeständigkeiten lassen sich jeweils mit Anteilen von ca. 1 Gew.% bis ca. 40 Gew.% an Polysulfonen und/oder thermoplastischen Polyimiden als zweite Polymerkomponente erzielen. Diese zweiten Polymerkomponenten verbessern auch das Brandverhalten des Kunststoffmaterials.

Erfindungsgemäß kann das Kunststoffmaterial ein oder mehrere weitere Additive enthalten, ausgewählt aus Verstärkungsstoffen, Füllstoffen und Pigmenten.

Besonders bevorzugt werden die Additive ausgewählt aus Aramid-, Natur-, Keramikfasern, insbesondere Wollastonit- und Basaltfasern, Kohle- und Metallfasern, Glashohlkugeln, Glaskugeln, Glaspartikeln, Keramikhohlkugeln, Keramikpartikeln, mineralischen Füllstoffen, insbesondere Kaolin, Talkum, Glimmer, Titandioxid, Calciumcarbonat, Siliciumdioxid und Schichtsilikaten, insbesondere in Form von Nanopartikeln.

Glasfasern können in dem Kunststoffmaterial mit Anteilen von ca. 1 bis ca. 50 Gew.% enthalten sein, weiter bevorzugt von ca. 5 bis ca. 35 Gew.%, noch weiter bevorzugt von ca. 10 bis ca. 30 Gew.%, am meisten bevorzugt ca. 10 bis ca. 25 Gew.%.

Typische Glasfasern weisen Faserdurchmesser von ca. 5 bis ca. 20 µm auf, weiter bevorzugt ca. 10 bis ca. 14 µm. Die mittleren Faserlängen liegen bevorzugt im Bereich von ca. 0,05 bis ca. 6 mm. Auch Langglasfasern mit Faserlängen größer 6 mm können zum Einsatz gelangen, um besonders hohe Festigkeiten und Schlagzähigkeiten zu erreichen.

Für die optimale Einbindung der Glasfasern in die Polymermatrix des Kunststoffmaterials werden diese bevorzugt mit Silanen an der Oberfläche beschichtet.

Gemäß einer weiteren Ausführungsform der Erfindung wird die erste Polymerkomponente in Form von PS-S zur Modifikation der Eigenschaften einer zweiten Polymerkomponente verwendet, wobei der Anteil des PS-S dann in einem Bereich von ca. 1 bis ca. 40 Gew.% variiert werden kann.

Die zweite Polymerkomponente, die hier dann als Hauptkomponente fungiert, wird bevorzugt ausgewählt aus PPS, PPE, PA und Polyester. Deren Anteil liegt bevorzugt im Bereich von ca. 99 bis ca. 60 Gew.%.

Bei diesen Polymeren als Hauptkomponente beobachtet man eine Verminderung der Wärmeleitfähigkeit, während die anderen vorteilhaften Eigenschaften dieser Polymere weitgehend erhalten bleiben.

PPE und PET lassen sich durch Zumischen der ersten Polymerkomponente in den gewählten Grenzen besser verarbeiten, wobei hier der Anteil des PS-S am Kunststoffmaterial vorzugsweise ca. 10 Gew.% oder mehr beträgt.

Auch bei dieser Ausführungsform der Erfindung lassen sich vielfältig Additive einsetzen, wie dies im Zusammenhang mit der ersten Ausführungsform beschrieben wurde.

Für beide Ausführungsformen der Erfindung eignen sich als weitere Komponenten des Kunststoffmaterials Schlagzähmodifier und Compatibilizer entsprechend den Maßgaben der Ansprüche 6 bis 10. Die Schlagzähmodifier und Compatibilizer können jeweils auch in Kombination von zwei oder mehr der genannten Spezies eingesetzt werden.

Als Schlagzähmodifier eingesetzte Polyolefine sind insbesondere Ethylen-Octen-Copolymere.

Manche der Schlagzähmodifier lassen sich, insbesondere in modifizierter Form, auch als Compatibilizer verwenden, da sie beide Eigenschaften in sich vereinen.

Ferner gilt für beide Ausführungsformen der Erfindung, dass das Kunststoffmaterial ein Flammschutzmittel umfassen kann, wobei der Anteil des Flammschutzmittels bevorzugt ca. 5 bis ca. 30 Gew.%, insbesondere ca. 5 bis ca. 25 Gew.%, beträgt.

Die Erfindung betrifft schließlich noch Metall-Kunststoffprofile gemäß Anspruch 15 sowie deren Verwendung nach Anspruch 16.

Diese und weitere Vorteile der Erfindung werden im Folgenden anhand der Zeichnung noch näher erläutert. Es zeigen im Einzelnen:
- Figur 1a und b:: eine ausschnittsweise Darstellung in Draufsicht auf ein Metall-Kunststoff-Verbundprofil der vorliegenden Erfindung sowie eine Schnittdarstellung hiervon;
- Figur 2:: das Metall-Kunststoff-Verbundprofil aus Figur 1 in perspektivischer Darstellung;
- Figur 3:: eine weitere Ausführungsform des erfindungsgemäßen Isolierstegs;
- Figur 4:: eine weitere Ausführungsform des erfindungsgemäßen Isolierstegs; und
- Figur 5:: eine weitere Ausführungsform des erfindungsgemäßen Isolierstegs.

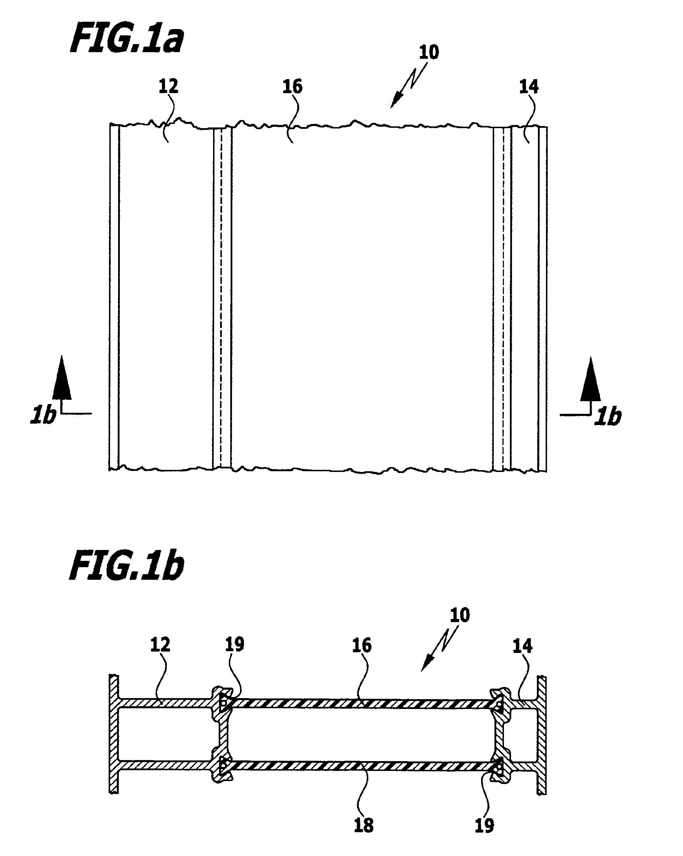

Figur 1 zeigt schematisch den Aufbau eines Ausschnitts eines Metall-Kunststoff-Verbundprofils 10 mit einem ersten Metallprofil 12, einem zweiten Metallprofil 14 und zwei dazwischen angeordneten Isolierstegen 16 und 18 aus einem Kunststoffmaterial.

Die Isolierstege 16, 18 sind beiderseits mit ihren Fußleisten 19 kraft- und/oder formschlüssig mit den Metallprofilen 12 und 14 verbunden sowie gegebenenfalls noch verklebt.

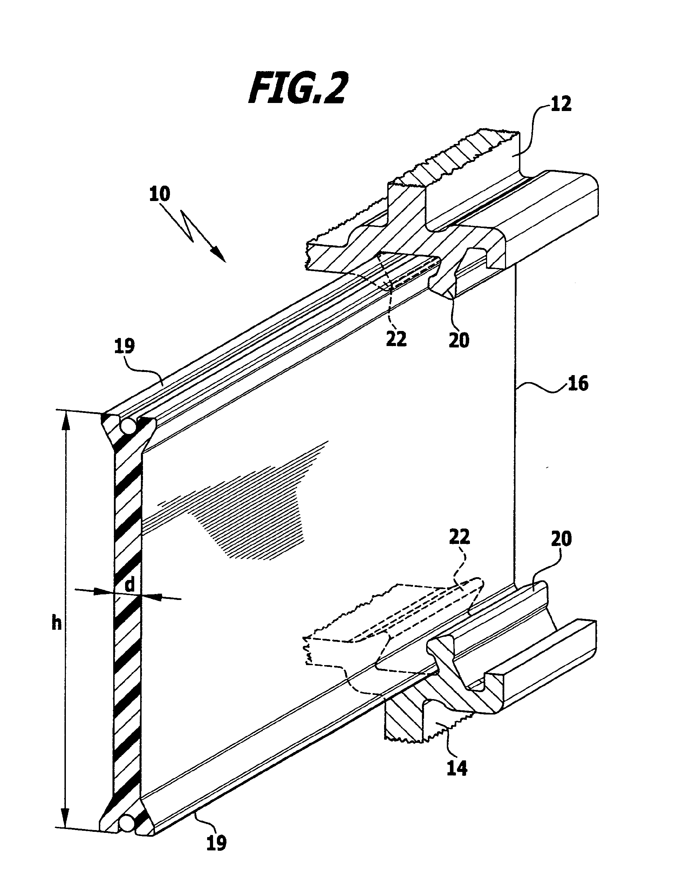

Figur 1 zeigt die Isolierstege 16, 18 nur in schematischer Form. Eine ins Einzelne gehende Darstellung des Isolierstegs 16 enthält Figur 2, die im Folgenden noch näher erläutert wird.

Aufgrund der geeigneten Auswahl des Kunststoffmaterials mit syndiotaktischem Polystyrol als erster Polymerkomponente und einer zweiten Polymerkomponente lassen sich die mechanischen, thermischen und eine Vielzahl anderer Eigenschaften auf den jeweiligen Einsatzzweck der Isolierstege anpassen.

Das Kunststoffmaterial kann auch Additive und/oder Verstärkungsfasern umfassen.

Andere Eigenschaften des Isolierstegs lassen sich durch die entsprechende Wahl der zweiten Polymerkomponente und deren Anteil an dem Kunststoffmaterial beeinflussen und optimieren, wie dies im Rahmen der allgemeinen Beschreibung der Erfindung weiter oben bereits ausführlich dargelegt wurde.

Figur 2 zeigt den Isoliersteg 16 des Verbundprofils 10 in Verbindung mit dem Außen- und Innenprofil 12, 14 in perspektivischer Darstellung. Der Mittenbereich wird durch ein einzelnes, sich über die gesamte Länge des Isolierstegs erstreckendes Stegelement gebildet.

Im montierten Zustand des Isolierstegs sind die Fußleisten 19 in den Schwalbenschwanzführungen der angrenzenden Metallprofile gehalten. Der so genannte Hammer 20 wird in einem Rändelschritt verformt und gegen die Fußleisten 19 gedrückt, die von einem Gegenlager 22 des Metallprofils 12 bzw. 14 ortsfest gehalten werden.

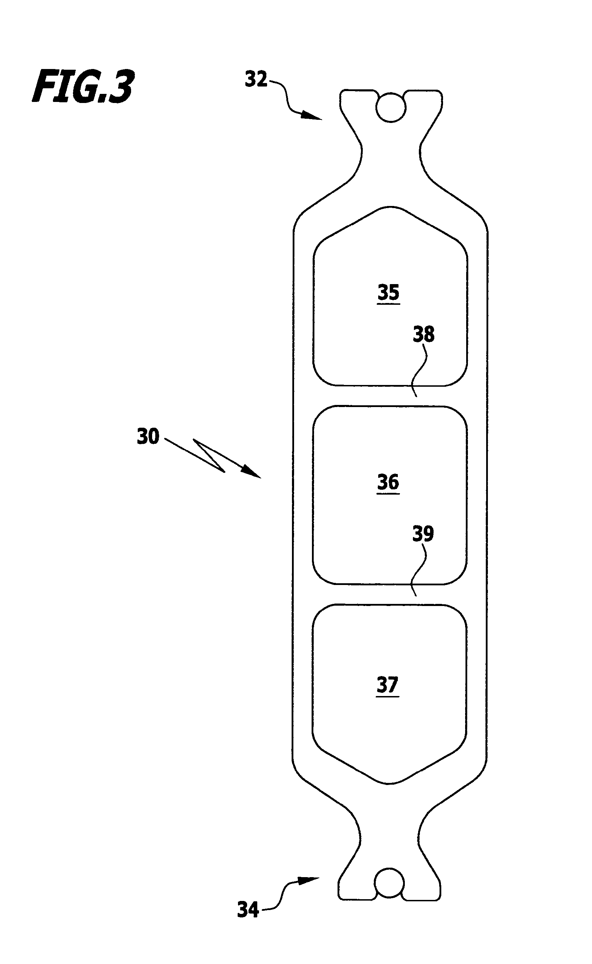

Figur 3 zeigt einen weiteren erfindungsgemäßen Isoliersteg in Form eines Hohlprofilkörpers 30, bei dem zwischen den beiden entgegen gesetzten Enden, an welche die Fußleisten 32, 34 angeformt sind, drei im Wesentlichen gleich große Hohlkammern 35, 36, 37 angeordnet sind. Die Kammern sind durch Stege 38, 39 voneinander getrennt und sind dadurch so kleinvolumig, dass ein Wärmetransport über Konvektion im Wesentlichen ausgeschlossen werden kann. Die Stege 38, 39 verbessern außerdem die mechanischen Kennwerte des Isolierstegs 30.

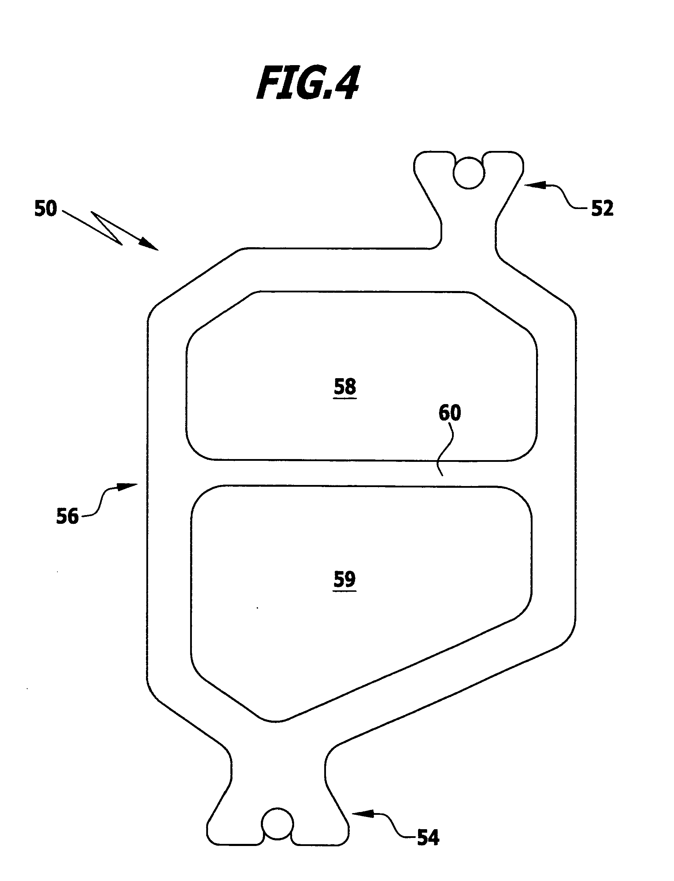

Figur 4 zeigt eine andere Möglichkeit der Ausbildung eines Hohlprofils im Rahmen eines erfindungsgemäßen Isolierstegs 50, bei dem die beiden Fußleisten 52, 54 über einen asymmetrisch ausgebildeten Profilkörper 56 miteinander verbunden und auf Abstand gehalten sind. Auch hier ist das Hohlprofil des Isolierstegs 50 in einzelne Hohlkammern 58, 59 mittels eines Stegs 60 unterteilt, so dass die Volumina der Hohlkammern 58, 59 klein genug sind, um Wärmetransport über Konvektion in nennenswertem Umfang auszuschließen. Auch hier wird durch den Steg 60 eine Verbesserung der mechanischen Eigenschaften erzielt.

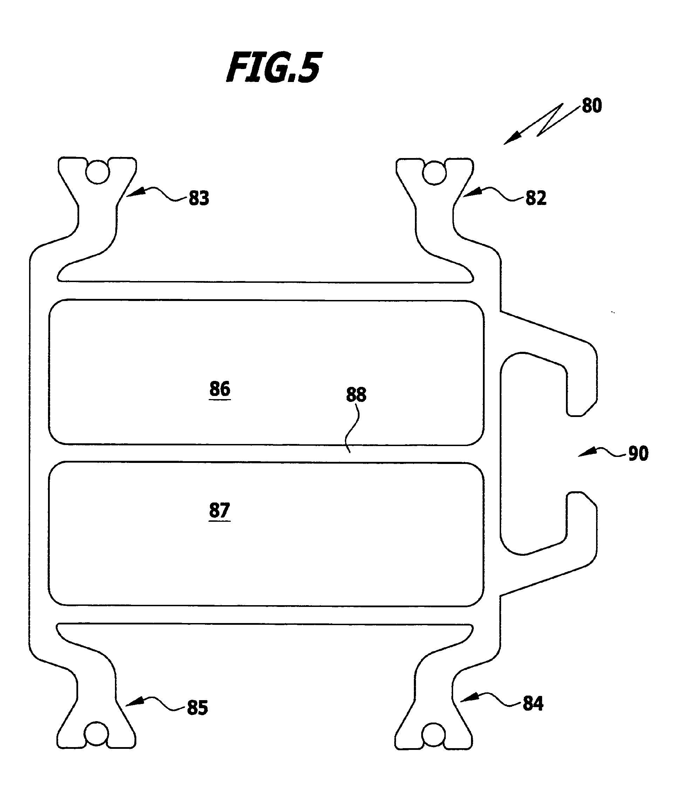

Schließlich sei in Form der Figur 5 noch ein weiteres Beispiel für einen erfindungsgemäßen Isoliersteg 80 gegeben. Bei dem Isoliersteg 80, der einen im Wesentlichen quaderförmigen Querschnitt aufweist, sind vier Fuß- oder Einrollleisten 82, 83 und 84, 85 vorhanden, die im Wesentlichen an den vier Ecken des Rechteckprofils angeordnet sind.

Der Rechteckprofilkörper ist mit zwei Hohlkammern 86, 87 versehen, die über einen mittleren Steg 88 voneinander getrennt sind. In der Figur 5 auf der rechten Seite ist an dem Isoliersteg 80 noch ein Aufnahmeelement 90 angeformt, welches seitlich offen ist und in das Funktionsteile eingebracht werden können, beispielsweise Dichtungselemente.

An einem konkreten Isoliersteg 16 des Typs wie in Figur 2 gezeigt soll in den folgenden Beispielen der Effekt der erfindungsgemäßen Auswahl und Zusammensetzung des Kunststoffmaterials noch näher erläutert werden. Als Profilhöhe h wurden 34 mm und als Dicke d 2 mm gewählt.

### Vergleichsbeispiel

Zum Vergleich der Eigenschaften der erfindungsgemäßen Isolierstege wurde ein Isoliersteg entsprechend dem Isoliersteg 16 aus Polyamid 66 mit einem Gehalt von 25 Gew.% an Kurzglasfasern gefertigt. Das Material Polyamid 66 mit 25 Gew.% Glasfasern weist eine Wärmeleitfähigkeit bei 20 °C nach DIN EN ISO 10456 von 0,30 W/mK auf.

Weitere, an dem Isoliersteg gemessene Eigenschaften sind in der Tabelle 1 gelistet.

### Beispiele 1 und 2

Als Beispiel 1 wurde ein erfindungsgemäßer Isoliersteg 16 aus syndiotaktischem Polystyrol mit einem Gehalt an 20 Gew.% Kurzglasfasern bei Extrudertemperaturen von 270 bis 290 °C und Werkzeugtemperaturen von 285 bis 300 °C gefertigt, das unter der Bezeichnung Xarec WA210 von Idemitsu Chemicals Europa PK erhältlich ist.

Die Messung der Wärmeleitfähigkeit dieses Materials beträgt nach DIN EN 12664 bei 20 °C 0,205 W/mK. Die Wärmeleitfähigkeit dieses Materials beträgt bis 45 °C, gemessen nach ASTM D-5930-97, 0,210 W/mK.

Für das Beispiel 2 wurde ein erfindungsgemäßer Isoliersteg 16 aus einem Kunststoffmaterial gefertigt, welches 25 Gew.% PS-S und 55 Gew.% Polyamid 66 umfasst sowie einen Glasfaseranteil von 20 Gew.%. Dieses Material ist unter der Bezeichnung Xarec NWA7020 von Idemitsu Chemicals Europa PK erhältlich.

Die Wärmeleitfähigkeit dieses Materials beträgt bis 45 °C, gemessen nach ASTM D-5930-97, 0,269 W/mK.

In der Tabelle 1 sind weitere Eigenschaften dieser beiden Profile aufgelistet.

Die für die Messung der Eigenschaften verwendeten Probekörper wurden gemäß DIN EN ISO 527-2 aus den Isolierstegen herausgefräst mit den Abmessungen des Probekörpertyps 1B, Gesamtlänge 150 mm.

Die Messung der jeweils in der ersten Zeile pro Beispiel angegebenen Werte erfolgte bei 23 °C und 50 % relativer Feuchte. In der zweiten Zeile sind die Werte angegeben, die sich nach einer Wasserlagerung der Probekörper bei 70 °C während 2,5 h ergeben; vor der Messung wurden diese Proben noch für 24 h bei 23 °C und 50 % relativer Feuchte gelagert.

Die Zugprüfung erfolgte an einer Zwickprüfmaschine (Universalprüfmaschine Zwick Z050) mit einer Prüfgeschwindigkeit von 5 mm/min.

Die Charpy-Schlagzähigkeitsprüfung erfolgte gemäß ISO 179-1eU unter Verwendung eines Hammers vom Typ 2J. Es wurde ein Pendelschlagwerk Zwick/ Roell vom Typ HIT25P eingesetzt.

**Tabelle 1**

| Beispiele | Feuchte-gehalt [Gew.%] | Zugversuch | | | | | | Schlagzähigkeit | |
|---|---|---|---|---|---|---|---|---|---|
| | | E-Modul | | σ-max | | ε-Bruch | | | |
| | | [MPa] | | [MPa] | | [%] | | [kJ/m²] | |
| Vergleich | 0,22 | 6015 | ±64 | 99,0 | ±1,3 | 3,3 | ±0,3 | 42,1 | ±1,6 |
| | 2,0 | 3618 | ±193 | 59,0 | ±1,5 | 8,3 | ±0,9 | ohne Bruch | |
| Beispiel 1 | 0,01 | 5991 | ±255 | 82,5 | ±3,4 | 2,1 | ±0,1 | 23,6 | ±1,8 |
| | 0,2 | 5670 | ±130 | 77,3 | ±2,4 | 1,9 | ±0,1 | 23,7 | ±1,4 |
| Beispiel 2 | 0,27 | 5878 | ±130 | 110,0 | ±2,5 | 2,3 | ±0,3 | 31,2 | ±2,5 |
| | 1,43 | 4566 | ±126 | 91,3 | ±2,8 | 3,7 | ±0,3 | 37,7 | ±3,6 |

Die Beispiele 1 und 2 belegen gegenüber dem Vergleichsbeispiel, dass vergleichbare Werte für den E-Modul und σ-max erhältlich sind, wobei vorteilhafterweise der Glasfasergehalt von 25 Gew.% (Vergleichsbeispiel) auf 20 Gew.% abgesenkt werden kann. Gleichzeitig wird eine wesentlich verminderte Wärmeleitfähigkeit bei den Beispielen 1 und 2 beobachtet.

Ferner ist beachtenswert, dass diese vorteilhaften Eigenschaften auch bei Feuchteaufnahme in viel größerem Umfang erhalten bleiben als bei dem Vergleichsbeispiel.

## Patentansprüche

1. Isoliersteg, insbesondere zur Verwendung in einem Kunststoff-Metall-Verbundprofil, wobei der Isoliersteg aus einem Kunststoffmaterial gefertigt ist, **dadurch gekennzeichnet, dass** das Kunststoffmaterial ein syndiotaktisches Polystyrol (PS-S) als eine erste thermoplastische Polymerkomponente sowie Glasfasern als Verstärkungsstoff umfasst.

2. Isoliersteg nach Anspruch 1, **dadurch gekennzeichnet, dass** das Kunststoffmaterial eine zweite Polymerkomponente umfasst, ausgewählt aus Polystyrol (PS), schlagzäh modifiziertem Polystyrol (PS-I), Polyphenylenether (PPE), Polyamid (PA), Polycarbonat (PC), Polyestercarbonat (PEC), Ethylvinylacetat (EVA), Polyphenylensulfid (PPS), Polyolefin, Polyester, insbesondere PET und PBT, Polysulfon und thermoplastischem Polyimid.

3. Isoliersteg nach Anspruch 1 oder 2, **dadurch gekennzeichnet, dass** das Kunststoffmaterial das PS-S mit einem Anteil von 30 bis 99 Gew.%, insbesondere 30 bis 60 Gew.%, enthält.

4. Isoliersteg nach Anspruch 1 oder 2, **dadurch gekennzeichnet, dass** das Kunststoffmaterial das PS-S mit einem Anteil von 1 bis 40 Gew.% enthält und dass die zweite Polymerkomponente ausgewählt ist aus PPS, PPE, PA und Polyester, wobei der Anteil der zweiten Polymerkomponente an dem Kunststoffmaterial 99 bis 60 Gew.% beträgt.

5. Isoliersteg nach einem der Ansprüche 1 bis 4, **dadurch gekennzeichnet, dass** das Kunststoffmaterial einen Schlagzähmodifier enthält, vorzugsweise ausgewählt aus Ethylen/Propylen/Dienkautschuk (EPDM), Ethylen-Propylen-Kautschuk (EPM), EVA, thermoplastischen Elastomeren, insbesondere Styrol-Blockcopolymeren, thermoplastischem Polyurethan (TPU), Styrol-Butadien-Kautschuk (SBR), Isopren-Kautschuk (IR), Kern/Hülle-Kautschuken, Polypropylen-Kautschuken sowie Polyolefinen, wobei die Styrol-Blockcopolymere insbesondere in Form von hydrierten Styrol-Butadien-Blockcopolymeren (SEB), Styrol-Butadien-Styrol-Blockcopolymeren (SBS), hydrierten Styrol-Butadien-Styrol-Blockcopolymeren (SEBS), hydrierten Styrol-Isopren-Butadien-Styrol-Blockcopolymeren (SEEPS), Styrol-Isopren-Blockcopolymeren (SIR), hydrierten Styrol-Isopren-Blockcopolymeren (SEP), Styrol-Isopren-Styrol-Blockcopolymeren (SIS) und hydrierten Styrol-Isopren-Styrol-Blockcopolymeren (SEPS) vorliegen.

6. Isoliersteg nach Anspruch 5, **dadurch gekennzeichnet, dass** das Kunststoffmaterial den Schlagzähmodifier mit einem Anteil von 1 bis 30 Gew.%, insbesondere 5 bis 30 Gew.%, enthält.

7. Isoliersteg nach einem der Ansprüche 1 bis 6, **dadurch gekennzeichnet, dass** das Kunststoffmaterial einen Compatibilizer enthält, insbesondere ausgewählt aus modifiziertem PPE, modifiziertem PS-S, modifiziertem hydriertem Styrol-Butadien-Stryrol-Blockcopolymer (SEBS), modifiziertem hydriertem Styrol-Isopren-Butadien-Styrol-Blockcopolymeren (SEEPS), modifiziertem Polyolefin, insbesondere modifiziertem PP und modifiziertem Ethylen-Octen-Copolymer, modifiziertem EPDM, wobei der Anteil des Compatibilizers am Kunststoffmaterial bevorzugt 1 bis 20 Gew.%, weiter bevorzugt 2 bis 15 Gew.% beträgt.

8. Isoliersteg nach einem der Ansprüche 5 bis 7, **dadurch gekennzeichnet, dass** die als Schlagzähmodifizierer und/oder Compatibilizer verwendeten Polymere und Copolymere mit Anhydridgruppen, Glycidylgruppen, Epoxygruppen, Carboxylgruppen und/oder Silan modifziert sind.

9. Isoliersteg nach Anspruch 8, **dadurch gekennzeichnet, dass** die als Schlagzähmodifizierer und/oder Compatibilizer verwendeten Polymere und Copolymere Maleinsäureanhydrid-modifiziert sind.

10. Isoliersteg nach einem der Ansprüche 1 bis 9, **dadurch gekennzeichnet, dass** das Kunststoffmaterial ein Flammschutzmittel umfasst, wobei der Anteil des Flammschutzmittels bevorzugt 5 bis 30 Gew.%, insbesondere 5 bis 25 Gew.%, beträgt.

11. Isoliersteg nach einem der Ansprüche 1 bis 10, **dadurch gekennzeichnet, dass** das Kunststoffmaterial ein oder mehrere weitere Additive enthält, ausgewählt aus Verstärkungsstoffen, Füllstoffen und Pigmenten.

12. Isoliersteg nach Anspruch 11, **dadurch gekennzeichnet, dass** das eine oder die mehreren Additive ausgewählt sind aus Aramid-, Natur-, Keramikfasern, insbesondere Wollastonit- und Basaltfasern, Kohle- und Metallfasern, Glashohlkugeln, Glaskugeln, Glaspartikeln, Keramikhohlkugeln, Keramikpartikeln, mineralischen Füllstoffen, insbesondere Kaolin, Talkum, Glimmer, Titandioxid, Calciumcarbonat, Siliciumdioxid und Schichtsilikaten, insbesondere in Form von Nanopartikeln.

13. Isoliersteg nach einem der Ansprüche 1 bis 12, **dadurch gekennzeichnet, dass** das Kunststoffmaterial Glasfasern in einem Anteil von 1 bis 50 Gew.%, bevorzugt 5 bis 30 Gew.%, weiter bevorzugt 10 bis 25 Gew.%, enthält.

14. Metall-Kunststoff-Verbundprofil umfassend ein Metallprofil sowie ein daran form- und/oder kraftschlüssig gehaltenes Kunststoffprofil in Form eines Isolierstegs gemäß einem der Ansprüche 1 bis 13.

15. Verwendung eines Verbundprofils gemäß Anspruch 14 zur Herstellung von Türen-, Fenster- oder Fassadenelementen.

## Claims

1. Insulating web, in particular, for use in a plastic-metal composite profile, the insulating web being made of a plastics material, **characterized in that** the plastics material comprises a syndiotactic polystyrene (PS-S) as a first thermoplastic polymer component and glass fibres as reinforcing material.

2. Insulating web in accordance with claim 1, **characterized in that** the plastics material comprises a second polymer component, selected from polystyrene (PS), impact-modified polystyrene (PS-I), polyphenylene ether (PPE), polyamide (PA), polycarbonate (PC), polyester carbonate (PEC), ethylvinylacetate (EVA), polyphenylene sulphide (PPS), polyolefin, polyester, in particular, PET and PBT, polysulphone and thermoplastic polyimide.

3. Insulating web in accordance with claim 1 or 2, **characterized in that** the plastics material contains the PS-S with a proportion of 30 to 99 % by weight, in particular, 30 to 60 % by weight.

4. Insulating web in accordance with claim 1 or 2, **characterized in that** the plastics material contains the PS-S with a proportion of 1 to 40 % by weight, and **in that** the second polymer component is selected from PPS, PPE, PA and polyester, the proportion of the second polymer component in the plastics material being 99 to 60 % by weight.

5. Insulating web in accordance with any one of claims 1 to 4, **characterized in that** the plastics material contains an impact modifier, preferably selected from ethylene/propylene/diene rubber (EPDM), ethylenepropylene rubber (EPM), EVA, thermoplastic elastomers, in particular, styrene block copolymers, thermoplastic polyurethane (TPU), styrene-butadiene rubber (SBR), isoprene rubber (IR), core/shell rubbers, polypropylene rubbers and polyolefins, the styrene block copolymers being present, in particular, in the form of hydrated styrene-butadiene block copolymers (SEB), styrene-butadiene-styrene block copolymers (SBS), hydrated styrene-butadiene-styrene block copolymers (SEBS), hydrated styrene-isoprene-butadiene-styrene block copolymers (SEEPS), styrene-isoprene block copolymers (SIR), hydrated styrene-isoprene block copolymers (SEP), styrene-isoprene-styrene block copolymers (SIS) and hydrated styrene-isoprene-styrene block copolymers (SEPS).

6. Insulating web in accordance with claim 5, **characterized in that** the plastics material contains the impact modifier with a proportion of 1 to 30 % by weight, in particular, 5 to 30 % by weight.

7. Insulating web in accordance with any one of claims 1 to 6, **characterized in that** the plastics material contains a compatibilizer, in particular, selected from modified PPE, modified PS-S, modified hydrated styrene-butadiene-styrene block copolymer (SEBS), modified hydrated styrene-isoprene-butadiene-styrene block copolymer (SEEPS), modified polyolefin, in particular, modified PP and modified ethylene-octene copolymer, modified EPDM, the proportion of the compatibilizer in the plastics material preferably being 1 to 20 % by weight, further preferred 2 to 15 % by weight.

8. Insulating web in accordance with any one of claims 5 to 7, **characterized in that** the polymers and copolymers used as impact modifiers and/or compatibilizers are modified with anhydride groups, glycidyl groups, epoxy groups, carboxyl groups and/or silane.

9. Insulating web in accordance with claim 8, **characterized in that** the polymers and copolymers used as impact modifiers and/or compatibilizers are modified with maleic anhydride.

10. Insulating web in accordance with any one of claims 1 to 9, **characterized in that** the plastics material comprises a flame-retardant agent, the proportion of the flame-retardant agent preferably being 5 to 30 % by weight, in particular, 5 to 25 % by weight.

11. Insulating web in accordance with any one of claims 1 to 10, **characterized in that** the plastics material comprises one or more further additives, selected from reinforcing materials, fillers and pigments.

12. Insulating web in accordance with claim 11, **characterized in that** the one or more additives are selected from aramide, natural, ceramic fibres, in particular, wollastonite and basalt fibres, carbon and metal fibres, hollow glass spheres, glass spheres, glass particles, hollow ceramic spheres, ceramic particles, mineral fillers, in particular, kaolin, talc, mica, titanium dioxide, calcium carbonate, silicon dioxide and layered silicates, in particular, in the form of nanoparticles.

13. Insulating web in accordance with any one of claims 1 to 12, **characterized in that** the plastics material contains glass fibres in a proportion of 1 to 50 % by weight, preferred 5 to 30 % by weight, further preferred 10 to 25 % by weight.

14. Metal-plastic composite profile comprising a metal profile and a plastic profile in the form of an insulating web in accordance with any one of claims 1 to 13 held thereon with a positively locking and/or force-locking connection.

15. Use of a composite profile in accordance with claim 14 for the production of doors, windows or façade elements.

## Revendications

1. Traverse isolante, en particulier, pour son utilisation dans un profilé composite de matière plastique-métal, la traverse isolante étant fabriquée en une matière plastique, **caractérisée en ce que** la matière plastique comprend un polystyrène syndiotactique (PS-S) comme premier composant polymère thermoplastique ainsi que des fibres de verre comme matière de renforcement.

2. Traverse isolante selon la revendication 1, **caractérisée en ce que** la matière plastique comprend un deuxième composant polymère, choisi parmi le polystyrène (PS), le polystyrène modifié de façon à résister aux chocs (PS-I), l'éther de polyphénylène (PPE), le polyamide (PA), le polycarbonate (PC), le carbonate de polyester (PEC), l'acétate d'éthylvinyle (EVA), le sulfure de polyphénylène (PPS), la polyoléfine, le polyester, en particulier le PET et le PBT, la polysulfone et le polyimide thermoplastique.

3. Traverse isolante selon la revendication 1 ou 2, **caractérisée en ce que** la matière plastique contient le PS-S en une proportion de 30 à 99 % en poids, en particulier de 30 à 60 % en poids.

4. Traverse isolante selon la revendication 1 ou 2, **caractérisée en ce que** la matière plastique contient le PS-S en une proportion de 1 à 40 % en poids et **en ce que** le deuxième composant polymère est choisi parmi le PPS, le PPE, le PA et le polyester, la proportion du deuxième composant polymère de la matière plastique étant de 99 à 60 % en poids.

5. Traverse isolante selon l'une des revendications 1 à 4, **caractérisée en ce que** la matière plastique contient un modificateur de la résistance aux chocs, choisi de préférence parmi le caoutchouc éthylène/propylène/diène (EPDM), le caoutchouc éthylène-propylène (EPM), l'EVA, les élastomères thermoplastiques, en particulier, les copolymères blocs styrène, le polyuréthane thermoplastique (TPU), le caoutchouc styrène-butadiène (SBR), le caoutchouc isoprène(IR), les caoutchoucs noyau/enveloppe, les caoutchoucs propylène et les polyoléfines, les copolymères blocs styrène étant présents en particulier sous la forme de copolymères blocs styrène-butadiène hydrogénés (SEB), de copolymères blocs styrène-butadiène-styrène (SBS), de copolymères blocs styrène-butadiène-styrène hydrogénés (SEBS), de copolymères blocs styrène-isoprène-butadiène-styrène hydrogénés (SEEPS), de copolymères blocs styrène-isoprène (SIR), de copolymères blocs styrène-isoprène hydrogénés (SEP), de copolymères blocs styrène-isoprène-styrène (SIS) et de copolymères blocs styrène-isoprène-styrène hydrogénés (SEPS).

6. Traverse isolante selon la revendication 5, **caractérisée en ce que** la matière plastique contient le modificateur de résistance aux chocs en une proportion de 1 à 30 % en poids, en particulier, de 5 à 30 % en poids.

7. Traverse isolante selon l'une des revendications 1 à 6, **caractérisée en ce que** la matière plastique contient un agent de compatibilité, choisi en particulier parmi le PPE modifié, le PS-S modifié, un copolymère bloc styrène-butadiène-styrène hydrogéné modifié (SEBS), un copolymère bloc styrène-isoprène-butadiène-styrène hydrogéné modifié (SEEPS), une polyoléfine modifiée, en particulier, la PP modifiée et un copolymère éthylène-octène modifié, l'EPDM modifié, la proportion de l'agent de compatibilité de la matière plastique étant de préférence de 1 à 20 % en poids, de manière davantage préférée, de 2 à 15 % en poids.

8. Traverse isolante selon l'une des revendications 5 à 7, **caractérisée en ce que** les polymères et copolymères utilisés comme modificateurs de la résistance aux chocs et/ou agents de compatibilité sont modifiés par des groupes anhydride, glycidyle, époxy, carboxyle et/ou silane.

9. Traverse isolante selon la revendication 8, **caractérisée en ce que** les polymères et copolymères utilisés comme modificateurs de la résistance aux chocs et/ou agents de compatibilité sont modifiés par l'anhydride d'acide maléique.

10. Traverse isolante selon l'une des revendications 1 à 9, **caractérisée en ce que** la matière plastique comprend un agent ignifuge, la proportion de l'agent ignifuge étant de préférence de 5 à 30 % en poids, en particulier, de 5 à 25 % en poids.

11. Traverse isolante selon l'une des revendications 1 à 10, **caractérisée en ce que** la matière plastique contient un ou plusieurs autres additifs choisis parmi des matières de renforcement, des substances de charge et des pigments.

12. Traverse isolante selon la revendication 11, **caractérisée en ce que** l'un ou les multiples additifs choisis sont des fibres d'aramide, des fibres naturelles, des fibres de céramique, en particulier, des fibres de wollastonite et de basalte, des fibres de carbone et de métal, des billes de verre creuses, des billes de verre, des particules de verre, des billes de céramique, des particules de céramique, des substances de charge minérales, en particulier, le kaolin, le talc, le mica, le dioxyde de titane, le carbonate de calcium, le dioxyde de silicium et des silicates lamellaires, en particulier sous la forme de nanoparticules.

13. Traverse isolante selon l'une des revendications 1 à 12, **caractérisée en ce que** la matière plastique contient des fibres de verre en une proportion de 1 à 50 % en poids, de préférence, de 5 à 30 % en poids, de manière davantage préférée, de 10 à 25 % en poids.

14. Profilé composite de métal-matière plastique comprenant un profilé métallique et un profilé en matière plastique maintenu sur celui-ci de façon solidaire et/ou par adhérence sous la forme d'un profilé isolant selon l'une des revendications 1 à 13.

15. Utilisation d'un profilé composite selon la revendication 14 pour la production d'éléments de porte, de fenêtre ou de façade.
